(19) Europäisches Patentamt
European Patent Office
Office européen des brevets

(11) **EP 4 787 527 A1**

(12) **EUROPEAN PATENT APPLICATION**
published in accordance with Art. 153(4) EPC

(43) Date of publication:
**05.08.2026 Bulletin 2026/32**

(21) Application number: **23953440.7**

(22) Date of filing: **26.09.2023**

(51) International Patent Classification (IPC):
***H01M 10/0567*** *(2010.01)* ***H01M 10/0569*** *(2010.01)*
***H01M 10/0568*** *(2010.01)* ***H01M 10/0525*** *(2010.01)*

(52) Cooperative Patent Classification (CPC):
**H01M 10/0525; H01M 10/0567; H01M 10/0568; H01M 10/0569;** Y02E 60/10

(86) International application number:
**PCT/CN2023/121742**

(87) International publication number:
**WO 2025/065282 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Dongguan Amperex Technology Limited**
**Dongguan City, Guangdong Province 523000 (CN)**

(72) Inventors:
- **PENG, Xiexue**
  **Dongguan, Guangdong 523000 (CN)**
- **ZHANG, Lilan**
  **Dongguan, Guangdong 523000 (CN)**
- **LIU, Jianyu**
  **Dongguan, Guangdong 523000 (CN)**
- **TANG, Chao**
  **Dongguan, Guangdong 523000 (CN)**

(74) Representative: **Kraus & Lederer PartGmbB**
**Thomas-Wimmer-Ring 15**
**80539 München (DE)**

(54) **ELECTROLYTE AND ELECTROCHEMICAL APPARATUS**

(57) Provided are an electrolyte and an electrochemical device. The electrolyte includes a compound represented by of formula I and a compound represented by formula II. The compound represented by formula I includes at least two of a compound represented by formula I-A, a compound represented by formula I-B, and a compound represented by formula I-C, and at least includes the compound represented by formula I-A. The electrolyte can improve the cycling performance and the high-temperature storage performance of the electrochemical device, thereby ensuring that the electrochemical device has good kinetic performance.

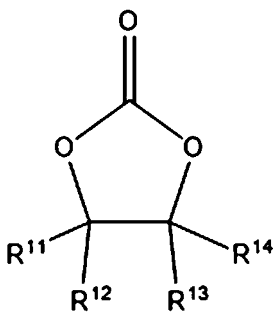 AA formula I-A

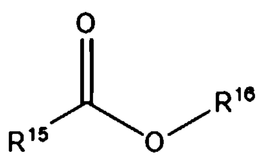 AA formula I-B

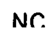

EP 4 787 527 A1

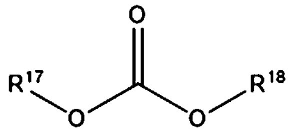 AA formula I-C 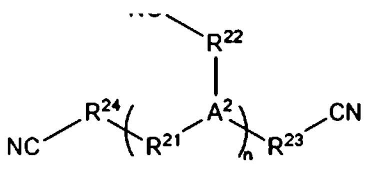 AA formula II

AA Formula

## Description

### TECHNICAL FIELD

The present application relates to the technical field of batteries, and in particular, to an electrolyte and an electrochemical device.

### BACKGROUND

With the widespread application of electrochemical devices (for example, lithium-ion batteries) in various electronic products, users have put forward increasingly high requirements for the performance of electrochemical devices, especially lithium-ion batteries with high energy density. At present, the main method to increase the energy density of lithium-ion batteries includes increasing the charging voltage of lithium-ion batteries. However, a higher charging voltage accelerates oxidative decomposition of the electrolyte by high-valence transition metals in the positive electrode active material. The high-valence transition metals obtain electron compensation from oxygen atoms, leading to oxygen release, which further accelerates electrolyte decomposition, resulting in increased gas production in lithium-ion batteries and affecting the cycling performance as well as high-temperature storage performance of lithium-ion batteries.

### SUMMARY

In view of this, the present application provides an electrolyte and an electrochemical device. The electrolyte has good oxidation resistance and can stabilize high-valence transition metals in the positive electrode active material while taking into account the stability of the negative electrode interface, which is beneficial to improving the cycling performance as well as high-temperature storage performance of the electrochemical device and ensuring that the electrochemical device has good kinetic performance.

According to a first aspect, the present application provides an electrolyte. The electrolyte includes a compound of formula I and a compound represented by formula II; where

the compound of formula I includes at least two of a compound represented by formula I-A, a compound represented by formula I-B, and a compound represented by formula I-C, and at least includes the compound represented by formula I-A;

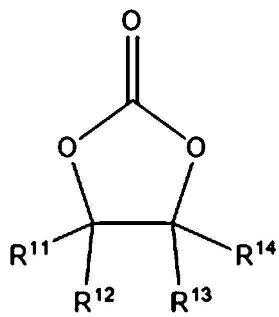

formula I-A

in formula I-A, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent includes halogen, and the compound represented by formula I-A contains at least one fluorine atom;

in some embodiments, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent includes fluorine atom, and the compound represented by formula I-A contains at least one fluorine atom;

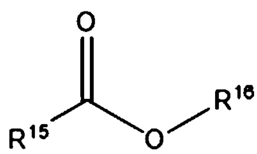

formula I-B

in formula I-B, $R^{15}$ and $R^{16}$ are each independently selected from $C_1$-$C_5$ alkyl;

in some embodiments, in formula I-B, $R^{15}$ and $R^{16}$ are each independently selected from $C_1$-$C_3$ alkyl;

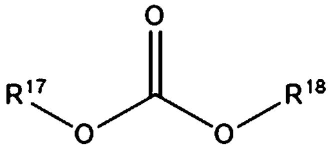 formula I-C

n formula I-C, $R^{17}$ and $R^{18}$ are each independently selected from $C_1$-$C_5$ alkyl;
in some embodiments, in formula I-C, $R^{17}$ and $R^{18}$ are each independently selected from $C_1$-$C_3$ alkyl;

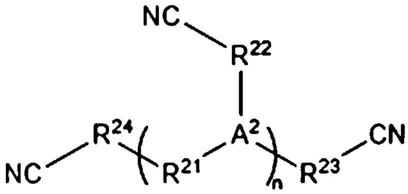

formula II; and
in formula II, n is selected from integers of 0 to 4, $A^2$ is selected from any one of

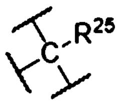, 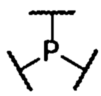, or 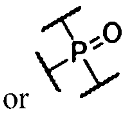,

and $R^{21}$, $R^{22}$, $R^{23}$, and $R^{24}$ are each independently selected from any one of covalent single bond, $C_1$-$C_5$ alkylene, $C_2$-$C_4$ alkenylene, or

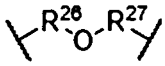;

where $R^{25}$ is selected from any one of hydrogen, cyano, $C_1$-$C_3$ alkyl, or $C_1$-$C_3$ alkyl substituted with cyano, and $R^{26}$ and $R^{27}$ are each independently selected from covalent single bond or $C_1$-$C_3$ alkylene.

In the present application, by adding at least two of the compound represented by formula I-A, the compound represented by formula I-B, and the compound represented by formula I-C to the electrolyte, and including at least the compound represented by formula I-A, the compound represented by formula I-A in the electrolyte can form an interface protective layer between the positive electrode and the electrolyte as well as between the negative electrode and the electrolyte. In addition, the introduction of the fluorinated substance represented by formula I-A can improve the oxidation resistance of the electrolyte. The introduction of the compound represented by formula I-B and/or the compound represented by formula I-C can reduce the viscosity of the electrolyte, which is beneficial to improving the kinetic performance of the electrolyte. In addition, the compound represented by formula II is introduced. The compound represented by formula II can stabilize high-valence transition metals in the positive electrode active material. The mutual synergistic cooperation between the compound of formula I and the compound represented by formula II helps to stabilize the interface between the positive electrode and the electrolyte as well as between the negative electrode and the electrolyte, thereby suppressing gas production in the electrolyte and improving the cycling performance as well as high-temperature storage performance of the electrochemical device.

In some embodiments, the compound represented by formula I-A is selected from at least one of the following compounds:

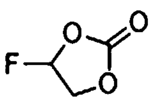 formula I-1, 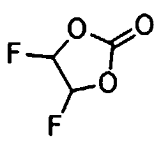 formula I-2, 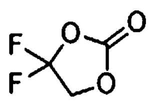 formula I-3,

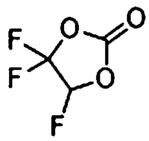 formula I-4, 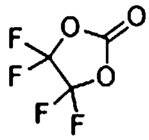 formula I-5, 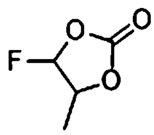 formula I-6,

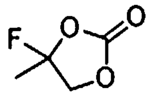 formula I-7, 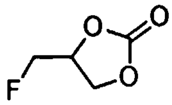 formula I-8, 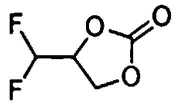 formula I-9,

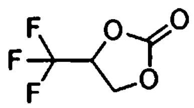 formula I-10, 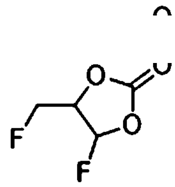 formula I-11, 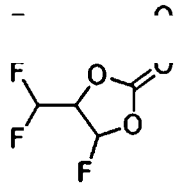 formula I-12,

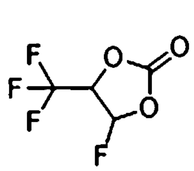 formula I-13, 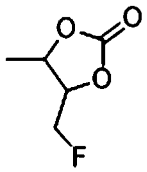 formula I-14, or 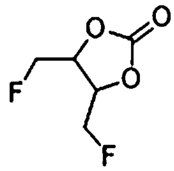 formula I-15.

Including the compound represented by the above structural formula in the electrolyte is beneficial to further improving the cycling performance as well as high-temperature storage performance of the electrochemical device.

In some embodiments, the compound represented by formula I-B is selected from at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, or butyl butyrate. Satisfying the above condition is beneficial to further improving the cycling performance as well as high-temperature storage performance of the electrochemical device.

In some embodiments, the compound represented by formula I-C is selected from at least one of dimethyl carbonate, diethyl carbonate, methyl ethyl carbonate, methyl propyl carbonate, ethyl propyl carbonate, or dipropyl carbonate. Satisfying the above condition is beneficial to further improving the cycling performance as well as high-temperature storage performance of the electrochemical device.

In some embodiments, the compound represented by formula II is selected from at least one of the following compounds:

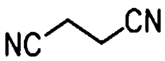 formula II-1, 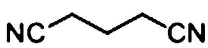 formula II-2,

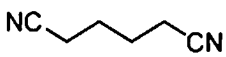 formula II-3, 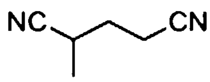 formula II-4,

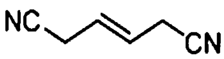 formula II-5, 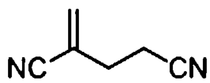 formula II-6,

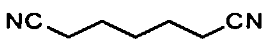 formula II-7, 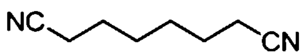 formula II-8,

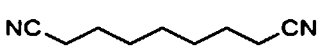 formula II-9, 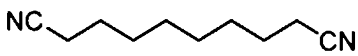 formula II-10,

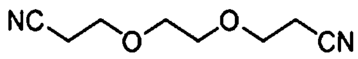 formula II-11, 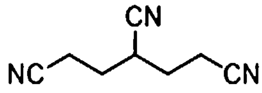 formula II-12,

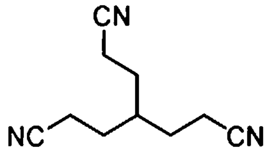 formula II-13, 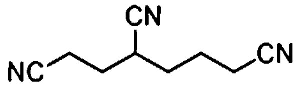 formula II-14,

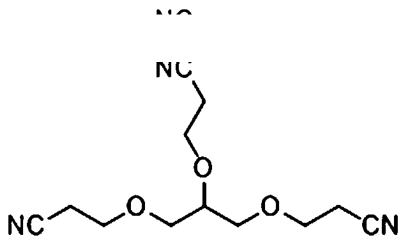 formula II-15, 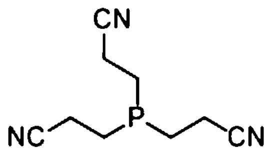 formula II-16,

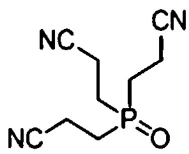 formula II-17, 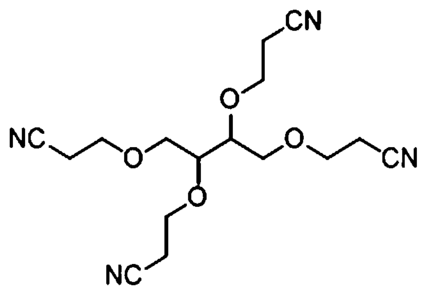 formula II-18,

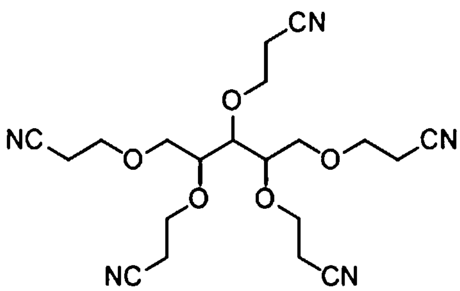 formula II-19,

or

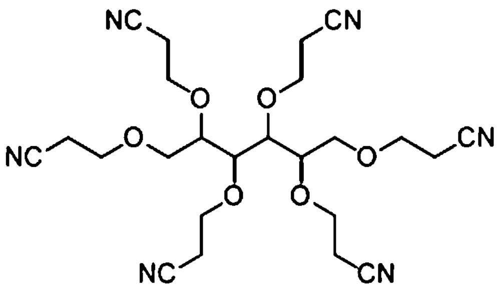

formula II-20. Including the compound represented by the above structural formula in the electrolyte is beneficial to further improving the cycling performance as well as high-temperature storage performance of the electrochemical device.

In some embodiments, the compound represented by formula II is selected from at least two of the above compounds. Satisfying the above condition is beneficial to further improving the cycling performance as well as high-temperature storage performance of the electrochemical device.

In some embodiments, the compound represented by formula II is selected from at least three of the above compounds. Satisfying the above condition is beneficial to further improving the cycling performance as well as high-temperature storage performance of the electrochemical device.

In some embodiments, based on a mass of the electrolyte, a mass percentage of the compound represented by formula I-A is denoted as $x_1$%, a sum of mass percentages of the compound represented by formula I-B and the compound represented by formula I-C is denoted as $x_2$%, a mass percentage of the compound represented by formula II is denoted as y%, a ratio of $x_2$ to $x_1$ is denoted as x, and a ratio of $x_1$ to y is denoted as z, satisfying: $5 \leq x_1 \leq 20$. Satisfying the above condition is beneficial to further improving the cycling performance as well as high-temperature storage performance of the electrochemical device. Preferably, $6 \leq x_1 \leq 10$.

In some embodiments, satisfying: $60 \leq x_2 \leq 90$. The sum of the mass percentages of the compound represented by formula I-B and/or the compound represented by formula I-C being within the above range better helps to improve the kinetic performance of the electrolyte, and can help the compound of formula I to improve the oxidation resistance of the electrolyte. Preferably, $65 \leq x_2 \leq 80$.

In some embodiments, $3 \leq x \leq 11$ is satisfied. The ratio of $x_2$ to $x_1$ being within the above range facilities the synergistic cooperation among the compound represented by formula I-A, the compound represented by formula I-B, and the compound represented by formula I-C, and has more obvious effects of improving the oxidation resistance of the electrolyte. Preferably, $7 \leq x \leq 10$.

In some embodiments, $1 \leq z \leq 20$ is satisfied. This better facilitates the electrical performance of the electrochemical device, especially the cycling performance as well as high-temperature storage performance of the electrochemical device. Preferably, $1 \leq z \leq 5$.

In some embodiments, the electrolyte further includes a compound represented by formula III;

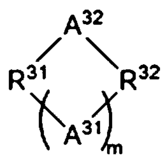 formula III

in formula III, m is selected from 0 or 1, $A^{31}$ and $A^{32}$ are each independently selected from any one of

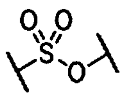, 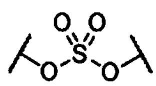, or 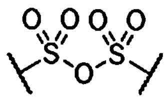, and 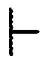

represents a binding site with an adjacent atom; and $R^{31}$ and $R^{32}$ are each independently selected from covalent single bond, substituted or unsubstituted $C_1$-$C_5$ alkylene, and substituted or unsubstituted $C_2$-$C_5$ alkenylene, and in a case of substitution, a substituent includes halogen. In the electrolyte of the present application, the compound represented by formula III is further added. The compound represented by formula III is a compound containing sulfur-oxygen double bond. The compound containing sulfur-oxygen double bond with the structure represented by formula III has strong oxidation resistance, and in cooperation with other compounds in the electrolyte, on the one hand, can improve the stability of the positive electrode interface, and on the other hand, can be reduced on the surface of the negative electrode to form a protective film, suppressing the decomposition of the electrolyte, and further enhancing the stability of the interface, thereby helping to improve the high-temperature full-charge storage performance as well as cycling performance of the electrochemical device.

In some embodiments, $R^{31}$ and $R^{32}$ are each independently selected from covalent single bond, substituted or unsubstituted $C_1$-$C_3$ alkylene, and substituted or unsubstituted $C_2$-$C_4$ alkenylene, and in a case of substitution, a substituent includes fluorine atom. Satisfying the above conditions is beneficial to further improving the cycling performance as well as high-temperature storage performance of the electrochemical device.

In some embodiments, the compound represented by formula III is selected from at least one of the following compounds:

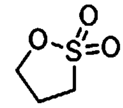 formula III-1, 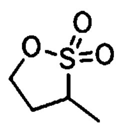 formula III-2, 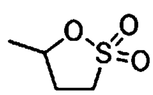 formula III-3,

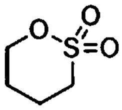 formula III-4, 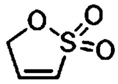 formula III-5, 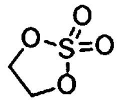 formula III-6,

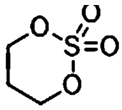 formula III-7, 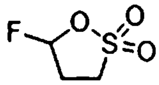 formula III-8,

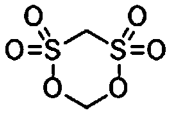 formula III-9, or 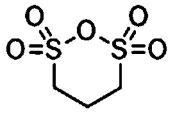 formula III-10.

Satisfying the above condition is beneficial to further improving the cycling performance as well as high-temperature storage performance of the electrochemical device.

In some embodiments, a mass percentage of the compound represented by formula III is 0.08wt% to 5wt%. Satisfying the above condition is more beneficial to further improving the cycling performance as well as high-temperature storage performance of the electrochemical device. Preferably, the mass percentage of the compound represented by formula III is 1wt% to 5wt%.

In some embodiments, the electrolyte further includes a compound represented by formula IV;

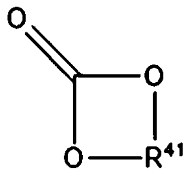 formula IV

in formula IV, $R^{41}$ is selected from substituted $C_1$-$C_6$ alkylene, and substituted or unsubstituted $C_2$-$C_6$ alkenylene, and in a case of substitution, a substituent is selected from $C_2$-$C_6$ alkenyl. In the electrolyte of the present application, the compound represented by formula IV is further added. The compound represented by formula IV cooperates with other compounds in the electrolyte, which is beneficial to enhancing the film-forming stability of the negative electrode solid electrolyte interphase SEI. Using the compound represented by formula IV can also increase the flexibility of the SEI film, further enhancing the protective effect on the active material, reducing the probability of interfacial contact between the active material and the electrolyte, and reducing side reactions between the electrolyte and the active material, thereby reducing impedance caused by accumulation of by-products during cycling.

In some embodiments, $R^{41}$ is selected from substituted $C_1$-$C_3$ alkylene, and substituted or unsubstituted $C_2$-$C_4$ alkenylene, and in a case of substitution, a substituent is selected from $C_2$-$C_4$ alkenyl.

In some embodiments, the compound represented by formula IV is selected from at least one of the following compounds:

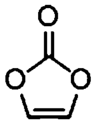 formula IV-1, 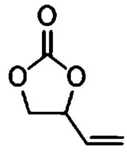 formula IV-2, 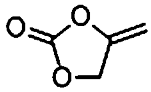 formula IV-3,

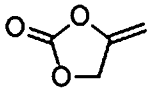 formula IV-4, or 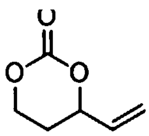 formula IV-5.

Including the compound represented by the above structural formula in the electrolyte is beneficial to further improving the

cycling performance as well as high-temperature storage performance of the electrochemical device.

In some embodiments, a mass percentage of the compound represented by formula IV is 0.01wt% to 2wt%. Satisfying the above condition is more beneficial to further improving the cycling performance as well as high-temperature storage performance of the electrochemical device. Preferably, the mass percentage of the compound represented by formula IV is 0.01wt% to 1.2wt%.

In some embodiments, the electrolyte further includes a compound represented by formula V;

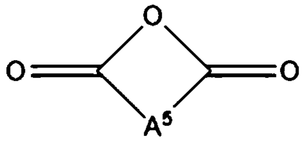 formula V

in formula V, $A^5$ is independently selected from

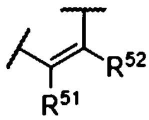

or

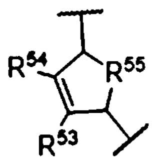,

$R^{51}$, $R^{52}$, $R^{53}$, and $R^{54}$ are each independently selected from hydrogen, substituted or unsubstituted $C_1$-$C_6$ alkyl, and substituted or unsubstituted $C_6$-$C_{10}$ aryl, $R^{55}$ is selected from substituted or unsubstituted $C_1$-$C_6$ alkylene, and in a case of substitution, a substituent includes halogen. In the electrolyte of the present application, the compound represented by formula V is further added. The compound represented by formula V cooperates with other compounds in the electrolyte, which can further enhance the stability of the interface between the positive electrode and the electrolyte as well as between the negative electrode and the electrolyte.

In some embodiments, the compound represented by formula V is selected from at least one of the following compounds:

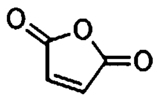 formula V-1, 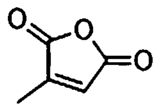 formula V-2,

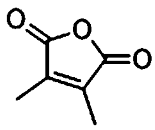 formula V-3, 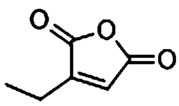 formula V-4,

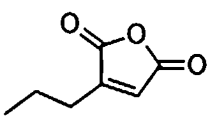 formula V-5, 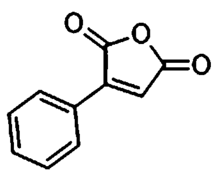 formula V-6,

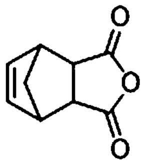 formula V-7, 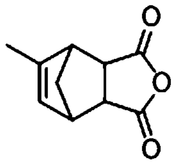 formula V-8,

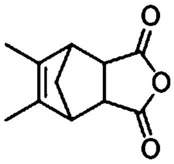 formula V-9, or 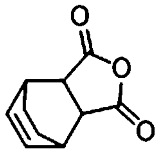 formula V-10.

Including the compound represented by the above structural formula in the electrolyte is beneficial to further improving the cycling performance as well as high-temperature storage performance of the electrochemical device.

In some embodiments, a mass percentage of the compound represented by formula V is 0.01wt% to 1wt%. Satisfying the above condition is more beneficial to further improving the cycling performance as well as high-temperature storage performance of the electrochemical device. Preferably, the mass percentage of the compound represented by formula V is 0.3wt% to 1wt%.

In some embodiments, a mass ratio of the compound of formula III, the compound represented by formula IV, and the compound represented by formula V is 2-5:1-2:1-2. This better helps to improve the cycling performance as well as high-temperature storage performance of the electrochemical device. Preferably, the mass ratio of the compound of formula III, the compound represented by formula IV, and the compound represented by formula V is 2-3:1-2:1-2.

In some embodiments, the electrolyte further includes a boron-containing lithium salt. The boron-containing lithium salt is selected from at least one of lithium tetrafluoroborate, lithium bis(oxalate)borate, or lithium difluoro(oxalate) borate. Based on a mass of the electrolyte, a mass percentage of the boron-containing lithium salt is 0.01wt% to 1wt%. Satisfying the above condition is more beneficial to further improving the cycling performance as well as high-temperature storage performance of the electrochemical device. Preferably, the mass percentage of the boron-containing lithium salt is 0.3wt% to 1wt%. The boron-containing lithium salt can form a film at the positive electrode interface with other compounds in the electrolyte, protecting the positive electrode interface and further improving the cycling performance of the electrochemical device.

According to a second aspect, the present application provides an electrochemical device. The electrochemical device includes the electrolyte described above.

The beneficial effects brought by the technical solutions provided by some embodiments of the present application at least include:

The present application provides the electrolyte and the electrochemical device. The present application first introduces the compound represented by formula I-A into the electrolyte. The compound represented by formula I-A is beneficial to forming an interface protective layer between the positive electrode and the electrolyte as well as between the negative electrode and the electrolyte, and the fluorinated substance represented by formula I-A can improve the oxidation resistance of the electrolyte. Secondly, the present application further adds the compound represented by formula I-B and/or the compound represented by formula I-C to the electrolyte containing the compound represented by formula I-A. The introduction of the compound represented by formula I-B and/or the compound represented by formula I-C can reduce the viscosity of the electrolyte and improve the kinetic performance of the electrolyte. The synergistic cooperation between the compound represented by formula I-A and the compound represented by formula I-B and/or the compound represented by formula I-C better helps to improve the oxidation resistance of the electrolyte. The present application adds the compound represented by formula II to the electrolyte containing the compound of formula I. The cyano in the compound represented by formula II can stabilize high-valence transition metals. Through the mutual cooperation between the compound of formula I and the compound represented by formula II in the present application, the interface between the positive electrode and the electrolyte as well as between the negative electrode and the electrolyte is stabilized, suppressing gas production in the electrolyte, thereby improving the cycling performance as well as high-temperature storage performance of the electrochemical device.

## DESCRIPTION OF EMBODIMENTS

To make the objectives, technical solutions, and advantages of the present application clearer, the present application is further described in detail below with reference to the accompanying drawings and embodiments. It should be understood that the specific embodiments described herein are only used to explain the present application and are not

intended to limit the present application.

Electrolyte

A first aspect of embodiments of the present application provides an electrolyte. The electrolyte includes a compound of formula I and a compound represented by formula II; where

the compound of formula I includes at least two of a compound represented by formula I-A, a compound represented by formula I-B, and a compound represented by formula I-C, and at least includes the compound represented by formula I-A;

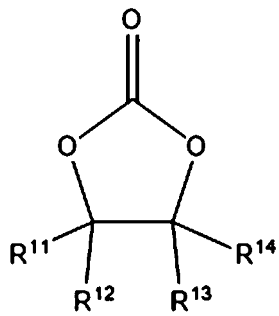
formula I-A

in formula I-A, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent includes halogen, and the compound represented by formula I-A contains at least one fluorine atom;

in some embodiments, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent includes fluorine atom, and the compound represented by formula I-A contains at least one fluorine atom;

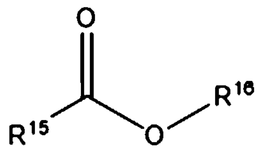
formula I-B

in formula I-B, $R^{15}$ and $R^{16}$ are each independently selected from $C_1$-$C_5$ alkyl;

in some embodiments, in formula I-B, $R^{15}$ and $R^{16}$ are each independently selected from $C_1$-$C_3$ alkyl;

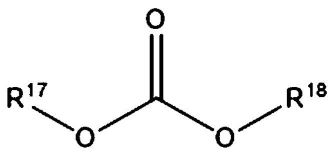
formula I-C

n formula I-C, $R^{17}$ and $R^{18}$ are each independently selected from $C_1$-$C_5$ alkyl;

in some embodiments, in formula I-C, $R^{17}$ and $R^{18}$ are each independently selected from $C_1$-$C_3$ alkyl;

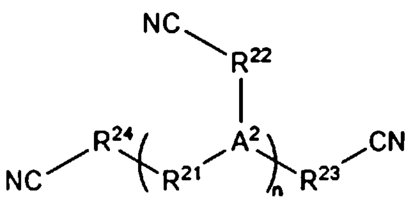
formula II;

and

in formula II, n is selected from integers of 0 to 4, $A^2$ is selected from any one of

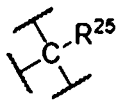, 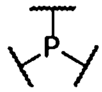, or 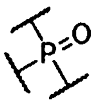,

and $R^{21}$, $R^{22}$, $R^{23}$, and $R^{24}$ are each independently selected from any one of covalent single bond, $C_1$-$C_5$ alkylene, $C_2$-$C_4$ alkenylene, or

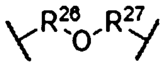;

where $R^{25}$ is selected from any one of hydrogen, cyano, $C_1$-$C_3$ alkyl, or $C_1$-$C_3$ alkyl substituted with cyano, and $R^{26}$ and $R^{27}$ are each independently selected from covalent single bond or $C_1$-$C_3$ alkylene.

In some embodiments, the compound represented by formula I-A is selected from at least one of the following compounds:

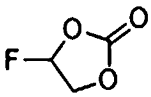 formula I-1, 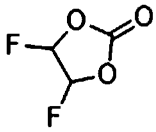 formula I-2, 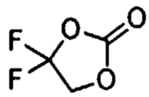 formula I-3,

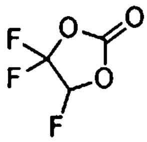 formula I-4, 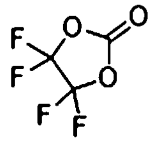 formula I-5, 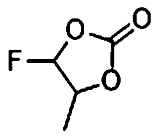 formula I-6,

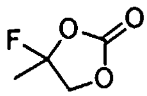 formula I-7, 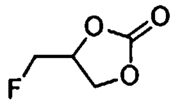 formula I-8, 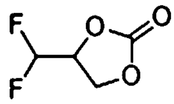 formula I-9,

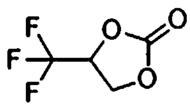 formula I-10, 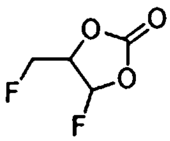 formula I-11, 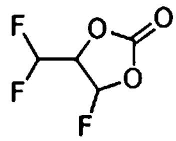 formula I-12,

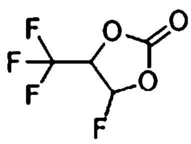 formula I-13, 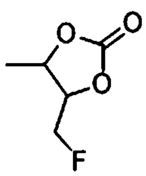 formula I-14, or 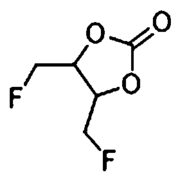 formula I-15.

In some embodiments, the compound represented by formula I-B is selected from at least one of methyl acetate, ethyl acetate, n-propyl acetate, n-butyl acetate, methyl propionate, ethyl propionate (EP), propyl propionate, butyl propionate, methyl butyrate, ethyl butyrate, propyl butyrate, or butyl butyrate.

In some embodiments, the compound represented by formula I-C is selected from at least one of dimethyl carbonate, diethyl carbonate (DEC), methyl ethyl carbonate, methyl propyl carbonate, ethyl propyl carbonate, or dipropyl carbonate.

In some embodiments, the compound represented by formula II is selected from at least one of the following compounds:

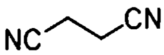 formula II-1, 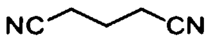 formula II-2,

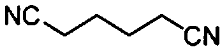 formula II-3, 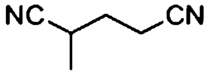 formula II-4,

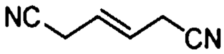 formula II-5, 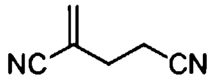 formula II-6,

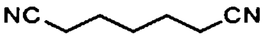 formula II-7, 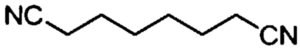 formula II-8,

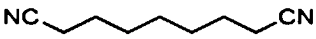 formula II-9, 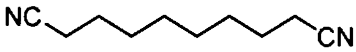 formula II-10,

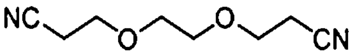 formula II-11, 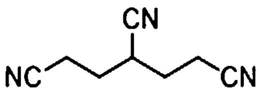 formula II-12,

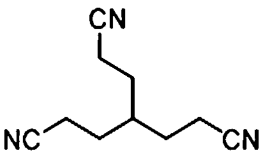 formula II-13, 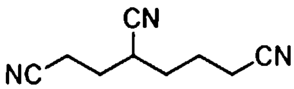 formula II-14,

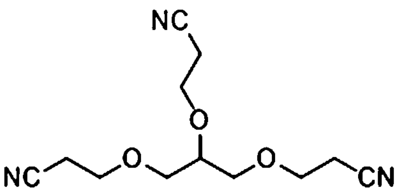 formula II-15, 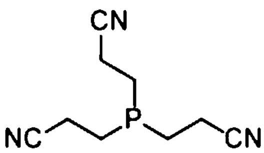 formula II-16,

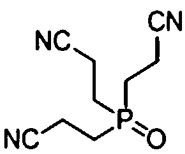 formula II-17, 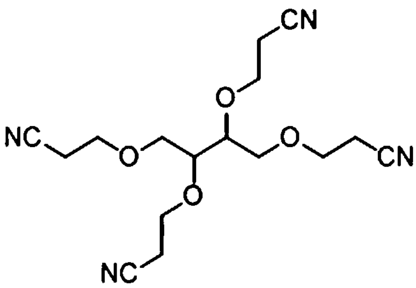 formula II-18,

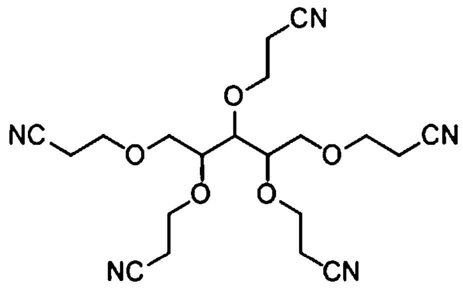
formula II-19,

or

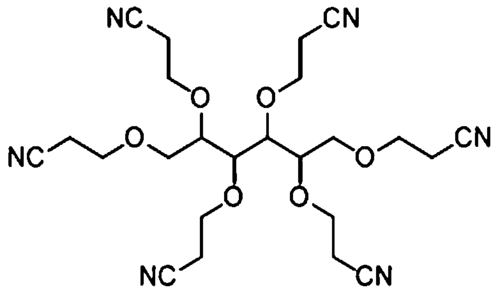
formula II-20.

In some embodiments, the compound represented by formula II is selected from at least two of the above compounds.

In some embodiments, the compound represented by formula II is selected from at least three of the above compounds.

In some embodiments, based on a mass of the electrolyte, a mass percentage of the compound represented by formula I-A is denoted as $x_1$%, a sum of mass percentages of the compound represented by formula I-B and the compound represented by formula I-C is denoted as $x_2$%, a mass percentage of the compound represented by formula II is denoted as y%, a ratio of $x_2$ to $x_1$ is denoted as x, and a ratio of $x_1$ to y is denoted as z, satisfying: $5 \leq x_1 \leq 20$. For example, the value range of $x_1$ is 5, 6, 8, 10, 12, 14, 15, 16, 18, 20, or a range composed of any two of the above values. When the value of $x_1$ is too small, the content of the compound represented by formula I-A in the electrolyte is too low, and the effect of improving the oxidation resistance of the electrolyte is relatively limited. When the value of $x_1$ is too large, the content of the compound represented by formula I-A in the electrolyte is too high, which is not beneficial to the dissociation of the lithium salt in the electrolyte.

In some embodiments, $60 \leq x_2 \leq 90$ is satisfied. For example, the value range of $x_2$ is 60, 65, 70, 75, 80, 85, 88, 90, or a range composed of any two of the above values.

In some embodiments, $3 \leq x \leq 11$ is satisfied. For example, the value range of x is 3, 4, 5, 6, 7, 8, 9, 10, 11, or a range composed of any two of the above values.

In some embodiments, $1 \leq z \leq 20$ is satisfied. For example, the value range of x is 1, 2, 3, 5, 8, 10, 12, 15, 18, 20, or a range composed of any two of the above values.

In some embodiments, the electrolyte further includes a compound represented by formula III;

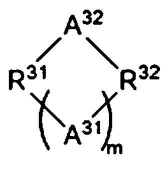
formula III

in formula III, m is selected from 0 or 1, $A^{31}$ and $A^{32}$ are each independently selected from any one of

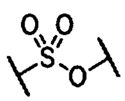, 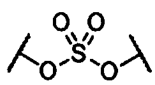, or 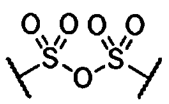, and 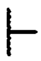

represents a binding site with an adjacent atom; and $R^{31}$ and $R^{32}$ are each independently selected from covalent single

bond, substituted or unsubstituted $C_1$-$C_5$ alkylene, and substituted or unsubstituted $C_2$-$C_5$ alkenylene, and in a case of substitution, a substituent includes halogen.

In some embodiments, $R^{31}$ and $R^{32}$ are each independently selected from covalent single bond, substituted or unsubstituted $C_1$-$C_3$ alkylene, and substituted or unsubstituted $C_2$-$C_4$ alkenylene, and in a case of substitution, a substituent includes fluorine atom.

In some embodiments, the compound represented by formula III is selected from at least one of the following compounds:

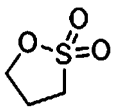 formula III-1, 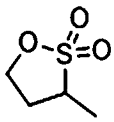 formula III-2, 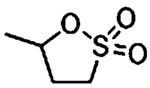 formula III-3,

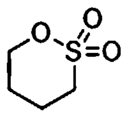 formula III-4, 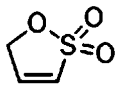 formula III-5, 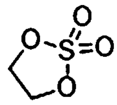 formula III-6,

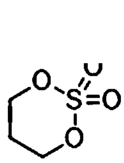 formula III-7, 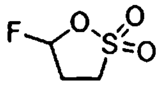 formula III-8,

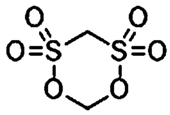 formula III-9, or 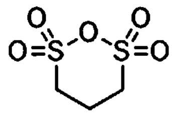 formula III-10.

In some embodiments, the mass percentage of the compound represented by formula III is 0.08wt% to 5wt%. For example, the mass percentage of the compound represented by formula III is 0.08wt%, 0.1wt%, 0.5wt%, 0.8wt%, 1wt%, 2wt%, 3wt%, 4wt%, 5wt%, or a range composed of any two of the above values. In the electrolyte, when the mass percentage of the compound represented by formula III is too low, the effect of reducing side reactions is relatively limited. When the mass percentage of the compound represented by formula III is too high, for example, greater than 5%, the enhancement effect of the compound represented by formula III on the stability of the positive electrode interface and the negative electrode interface is no longer significantly improved, and the viscosity of the electrolyte may be too large, affecting kinetics and the performance of the electrochemical device.

In some embodiments, the electrolyte further includes a compound represented by formula IV;

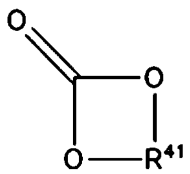 formula IV

in formula IV, $R^{41}$ is selected from substituted $C_1$-$C_6$ alkylene, and substituted or unsubstituted $C_2$-$C_6$ alkenylene, and in a case of substitution, a substituent is selected from $C_2$-$C_6$ alkenyl.

In some embodiments, $R^{41}$ is selected from substituted $C_1$-$C_3$ alkylene, and substituted or unsubstituted $C_2$-$C_4$ alkenylene, and in a case of substitution, a substituent is selected from $C_2$-$C_4$ alkenyl.

In some embodiments, the compound represented by formula IV is selected from at least one of the following compounds:

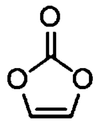 formula IV-1, 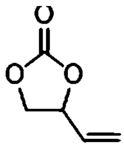 formula IV-2, 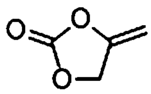 formula IV-3,

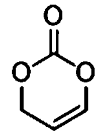 formula IV-4, or 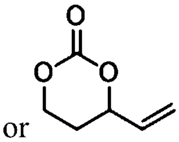 formula IV-5.

In some embodiments, a mass percentage of the compound represented by formula IV is 0.01wt% to 2wt%. For example, the mass percentage of the compound represented by formula IV is 0.01wt%, 0.05wt%, 0.08wt%, 0.1wt%, 0.5wt%, 0.8wt%, 1wt%, 1.2wt%, 1.5wt%, 1.8wt%, 2wt%, or a range composed of any two of the above values. In the electrolyte, the compound represented by formula IV having a too low mass percentage cannot fully protect the interface, and has limited performance improvement of the electrochemical device. When the mass percentage of the compound represented by formula IV is too high, for example, greater than 2%, the interfacial impedance is too large, affecting the performance of the electrochemical device.

In some embodiments, the electrolyte further includes a compound represented by formula V;

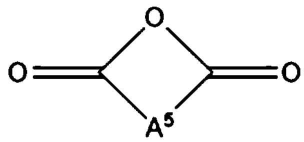 formula V

in formula V, $A^5$ is independently selected from

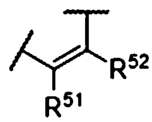

or

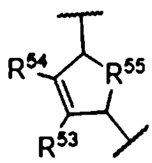,

$R^{51}$, $R^{52}$, $R^{53}$, and $R^{54}$ are each independently selected from hydrogen, substituted or unsubstituted $C_1$-$C_6$ alkyl, and substituted or unsubstituted $C_6$-$C_{10}$ aryl, $R^{55}$ is selected from substituted or unsubstituted $C_1$-$C_6$ alkylene, and in a case of substitution, a substituent includes halogen.

In some embodiments, the compound represented by formula V is selected from at least one of the following compounds:

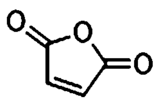 formula V-1, 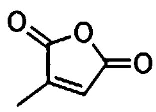 formula V-2,

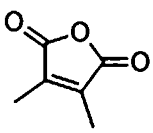 formula V-3, 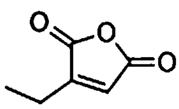 formula V-4,

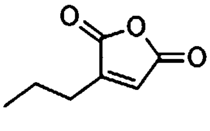 formula V-5, 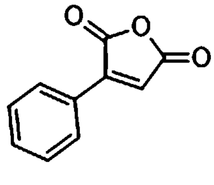 formula V-6,

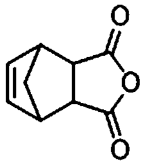 formula V-7, 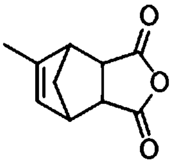 formula V-8,

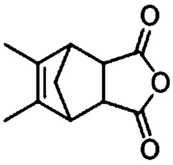 formula V-9, or 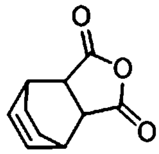 formula V-10.

In some embodiments, a mass percentage of the compound represented by formula V is 0.01wt% to 1wt%. For example, the mass percentage of the compound represented by formula V is 0.01wt%, 0.05wt%, 0.08wt%, 0.1wt%, 0.3wt%, 0.5wt%, 0.8wt%, 1wt%, or a range composed of any two of the above values. In the electrolyte, the compound represented by formula V having a too low mass percentage cannot fully protect the interface, and has limited performance improvement of the electrochemical device. When the mass percentage of the compound represented by formula V is too high, for example, greater than 1%, the interfacial impedance is too large, affecting the performance of the electrochemical device.

In some embodiments, a mass ratio of the compound of formula III, the compound represented by formula IV, and the compound represented by formula V is 2-5:1-2:1-2. For example, the mass ratio of the compound of formula III, the compound represented by formula IV, and the compound represented by formula V is 1.8-2.2:0.8-1.2:0.8-1.2.

In some embodiments, the electrolyte further includes a boron-containing lithium salt. The boron-containing lithium salt is selected from at least one of lithium tetrafluoroborate, lithium bis(oxalate)borate, or lithium difluoro(oxalate) borate. Based on a mass of the electrolyte, a mass percentage of the boron-containing lithium salt is 0.01wt% to 1wt%.

For example, the mass percentage of the boron-containing lithium salt is 0.01wt%, 0.05wt%, 0.08wt%, 0.1wt%, 0.3wt%, 0.5wt%, 0.8wt%, 1wt%, or a range composed of any two of the above values.

In some embodiments, the electrolyte may further include another non-aqueous organic solvent and an electrolyte salt. The another non-aqueous organic solvent may include at least one of ether solvent or other aprotic solvents. Examples of the ether solvent include at least one of ethylene glycol dimethyl ether, diethylene glycol dimethyl ether, tetraethylene glycol dimethyl ether, dibutyl ether, tetrahydrofuran, 2-methyltetrahydrofuran, or bis(2,2,2-trifluoroethyl) ether.

The electrolyte salt includes at least one of an organic lithium salt or an inorganic lithium salt. In some embodiments, the electrolyte salt includes at least one of lithium hexafluorophosphate $LiPF_6$, lithium bis(trifluoromethanesulfonyl)imide $LiN(CF_3SO_2)_2$ which is abbreviated as LiTFSI, lithium bis(fluorosulfonyl)imide $Li(N(SO_2F)_2)$ (abbreviated as LiFSI), lithium cesium hexafluoride $LiCsF_6$, lithium perchlorate $LiClO_4$, or lithium trifluoromethanesulfonate $LiCF_3SO_3$.

In some embodiments, based on the mass of the electrolyte, the mass percentage of the electrolyte salt is 10% to 20%. If the concentration of the electrolyte salt is too low, the ionic conductivity of the electrolyte is low, which will affect the rate and cycling performance of the electrochemical device. If the concentration of the electrolyte salt is too high, the viscosity of the electrolyte is too large, affecting the rate performance of the electrochemical device. Optionally, the mass percentage of the electrolyte salt is 12% to 19%.

<u>Electrochemical device</u>

A second aspect of the embodiments of the present application provides an electrochemical device, and the electrochemical device includes a housing and an electrode assembly. The housing is used to encapsulate an electrode assembly, and the electrode assembly including a positive electrode plate, a negative electrode plate, a separator, and the electrolyte of the first aspect described above.

Positive electrode plate

The positive electrode plate includes a positive electrode current collector and a positive electrode active material layer disposed on the positive electrode current collector, and the positive electrode active material layer may be located on one side or two sides of the positive electrode current collector.

In some embodiments, the positive electrode current collector may be aluminum foil, or other positive electrode current collectors commonly used in the art, for example, may include aluminum alloy foil, a composite current collector (for example, a composite current collector with a metal layer disposed on the surface of a polymer layer), or the like.

In some embodiments, the thickness of the positive electrode current collector may be 1 μm to 200 μm. The present application does not particularly limit the thickness of the positive electrode current collector as long as the purpose of the present application can be achieved.

In some embodiments, the positive electrode active material layer may be applied only on a partial region of the positive electrode current collector.

In some embodiments, the thickness of the positive electrode active material layer may be 10 μm to 500 μm. The present application does not particularly limit the thickness of the positive electrode active material layer as long as the purpose of the present application can be achieved.

In some embodiments, the positive electrode active material layer includes a positive electrode active material, and the positive electrode active material includes $LiCoO_2$, $LiNiO_2$, $LiMn_2O_4$, $LiCo_{1-y}MyO_2$, $LiNi_{1-y}MyO_2$, $LiMn_{2-y}MyO_4$, or $LiNi_xCo_yMn_zM_{1-x-y-z}O_2$, where M is selected from at least one of Fe, Co, Ni, Mn, Mg, Cu, Zn, Al, Sn, B, Ga, Cr, Sr, V, or Ti, and $0 \leq y \leq 1$, $0 \leq x \leq 1$, $0 \leq z \leq 1$, and $x+y+z \leq 1$.

In some embodiments, the positive electrode active material may include at least one of lithium cobalt oxide, lithium manganate, lithium iron phosphate, lithium manganese iron phosphate, nickel cobalt manganese oxide lithium, nickel cobalt aluminum oxide lithium, or nickel manganese oxide lithium, and the above positive electrode active materials may undergo doping and/or coating treatment.

In some embodiments, the positive electrode active material layer further includes a binder and a conductive agent. The binder may include at least one of polyvinylidene fluoride, a copolymer of vinylidene fluoride-hexafluoropropylene, a styrene-acrylate copolymer, a styrene-butadiene copolymer, polyamide, polyacrylonitrile, polyacrylate, polyacrylic acid, polyacrylate salt, sodium carboxymethyl cellulose, polyvinyl acetate, polyvinylpyrrolidone, polyvinyl ether, polymethyl methacrylate, polytetrafluoroethylene, or polyhexafluoropropylene. The conductive agent may include at least one of conductive carbon black, acetylene black, Ketjen black, lamellar graphite, graphene, carbon nanotubes, or carbon fibers.

In some embodiments, the mass ratio of the positive electrode active material, the conductive agent, and the binder in the positive electrode active material layer may be 70-98:1-15:1-15. It is understandable that the present application does not particularly limit the mass ratio of the positive electrode active material, the conductive agent, and the binder in the positive electrode active material layer, and those skilled in the art may select according to actual needs as long as the purpose of the present application can be achieved.

Negative electrode plate

The negative electrode may include a negative electrode current collector and a negative electrode active material layer disposed on the negative electrode current collector, and the negative electrode active material layer may be disposed on one side or two sides of the negative electrode current collector. In some embodiments, the negative electrode current collector may be at least one of copper foil, aluminum foil, nickel foil, or carbon-based current collector. In some embodiments, the thickness of the negative electrode current collector may be 1 μm to 200 μm. In some embodiments, the negative electrode active material layer may be applied only on a partial region of the negative electrode current collector. In some embodiments, the thickness of the negative electrode active material layer may be 10 μm to 500 μm. It should be understood that these are only exemplary, and other suitable thicknesses may be used.

In some embodiments, the negative electrode active material layer includes a negative electrode active material. In some embodiments, the negative electrode active material in the negative electrode active material layer includes at least one of lithium metal, natural graphite, artificial graphite, or silicon-based material. In some embodiments, the silicon-based material includes at least one of silicon, silicon oxide compound, silicon carbon compound, or silicon alloy.

In some embodiments, the negative electrode active material layer may further include a conductive agent and/or a binder. The conductive agent in the negative electrode active material layer may include at least one of carbon black, acetylene black, Ketjen black, lamellar graphite, graphene, carbon nanotubes, carbon fibers, or carbon nanowires. In some embodiments, the binder in the negative electrode active material layer may include at least one of carboxymethyl cellulose CMC, polyacrylic acid, polyacrylate salt, polyacrylate, polyvinylpyrrolidone, polyaniline, polyimide, polyamide imide, polysiloxane, styrene-butadiene rubber, epoxy resin, polyester resin, polyurethane resin, or polyfluorene. It should be understood that the materials disclosed above are only exemplary, and the negative electrode active material layer may

use any other suitable materials. In some embodiments, the mass ratio of the negative electrode active material, the conductive agent, and the binder in the negative electrode active material layer may be 80-99:0.5-10:0.5-10. It should be understood that this is only exemplary and is not intended to limit the present application.

Separator

The separator includes at least one of polyethylene, polypropylene, polyvinylidene fluoride, polyethylene terephthalate, polyimide, or aramid. For example, polyethylene includes at least one selected from high-density polyethylene, low-density polyethylene, or ultra-high molecular weight polyethylene. In particular, polyethylene and polypropylene have a good effect on preventing short circuits and can improve the stability of the battery through a shutdown effect. In some embodiments, the thickness of the separator is in the range of about 3 μm to 500 μm.

In some embodiments, the surface of the separator may further include a porous layer, and the porous layer is disposed on at least one surface of the separator. The porous layer includes at least one of inorganic particles or a binder. The inorganic particles are selected from at least one of alumina $Al_2O_3$, silica $SiO_2$, magnesia MgO, titania $TiO_2$, hafnia $HfO_2$, tin oxide $SnO_2$, ceria $CeO_2$, nickel oxide NiO, zinc oxide ZnO, calcium oxide CaO, zirconia $ZrO_2$, yttria $Y_2O_3$, silicon carbide SiC, boehmite, aluminum hydroxide, magnesium hydroxide, calcium hydroxide, or barium sulfate. In some embodiments, the pores of the separator have a diameter in the range of about 0.01 μm to 1 μm. The binder of the porous layer is selected from at least one of polyvinylidene fluoride, a copolymer of vinylidene fluoride-hexafluoropropylene, polyamide, polyacrylonitrile, polyacrylate, polyacrylic acid, polyacrylate salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve the heat resistance, oxidation resistance, and electrolyte wetting performance of the separator, and enhance the adhesion between the separator and the electrode plate.

Housing

The housing may be a hard shell or a flexible shell. Illustratively, the material of the hard shell may be metal, and the flexible shell may be a metal plastic film, such as aluminum plastic film, or steel plastic film.

The electrochemical device of the present application is not particularly limited and may include any device in which an electrochemical reaction occurs. In some embodiments, the electrochemical device may include, but is not limited to, a lithium-ion battery. The electrode assembly in the electrochemical device is a wound electrode assembly or a stacked electrode assembly. In some embodiments, the electrochemical device is a lithium-ion battery, but the present application is not limited thereto. In some embodiments of the present application, a lithium-ion battery is used as an example. The positive electrode, the separator, and the negative electrode are sequentially wound or stacked into an electrode assembly, and then placed in, for example, an aluminum plastic film housing for sealing. The electrolyte is injected, followed by formation and sealing to obtain a lithium-ion battery. Then, the prepared lithium-ion battery is subjected to performance testing. Those skilled in the art will understand that the preparation method of the electrochemical device, for example, the lithium-ion battery, described above is only an embodiment. Without departing from the content disclosed in the present application, other methods commonly used in the art may be used.

Hereinafter, the electrochemical device being a lithium-ion battery is used as an example in conjunction with specific embodiments, and the present application will be further described. It should be understood that these embodiments are only used to illustrate the present application and are not used to limit the scope of the present application.

Below, examples and comparative examples are presented to illustrate the embodiments of the present application in greater detail. Unless otherwise stated, the listed parts, contents, percentages, and ratios are all based on weight.

Preparation of positive electrode plate

A positive electrode active material lithium cobalt oxide $LiCoO_2$, a conductive agent conductive carbon black, and a binder polyvinylidene fluoride PVDF were dissolved in N-methylpyrrolidone NMP solution in a weight ratio of 97.9:0.9:1.2 to form a positive electrode slurry. A 13 μm aluminum foil was used as the positive electrode current collector, the positive electrode slurry was applied on the positive electrode current collector, and after drying, cold pressing, and cutting, a positive electrode was obtained. The compacted density of the positive electrode was 4.15 $g/cm^3$.

Preparation of negative electrode plate

A negative electrode active material artificial graphite, a binder styrene-butadiene rubber SBR, and a thickener sodium carboxymethyl cellulose CMC were dissolved in deionized water in a weight ratio of 97.4:1.4:1.2 to form a negative electrode slurry. A 10 μm thick copper foil was used as a negative electrode current collector, the negative electrode slurry

was applied on the negative electrode current collector, and after drying, cold pressing, and cutting, a negative electrode was obtained. The compacted density of the negative electrode was 1.8 g/$cm^3$.

Preparation of separator

The separator substrate was 5 μm thick polyethylene PE, a 2 μm thick alumina ceramic layer was applied on one surface of the separator substrate, and finally 2.5 mg/1540.25 $mm^2$ of binder polyvinylidene fluoride PVDF was applied on two surfaces of the separator with a single-layer ceramic coating, and dried. The porosity of the separator was 39%.

Preparation of electrolyte

In an environment with water content less than 10 ppm, the compound of formula I-A, the compound of formula I-B, the compound of formula I-C, or other non-aqueous organic solvents were mixed in a certain mass ratio, then an appropriate amount of the compound of formula II was added, and these materials were mixed uniformly. An electrolyte salt $LiPF_6$ was dissolved in the above mixed solvent, and mixed uniformly to form an electrolyte, where based on the mass of the electrolyte, the mass percentage of $LiPF_6$ was 12.5%. The difference between Examples 1 to 17 and Comparative Example 1 lied in the types and/or contents of the compound of formula I-A, the compound of formula I-B, the compound of formula I-C, or the compound of formula II used in the electrolyte, as specifically shown in Table 1. The corresponding relationships of some compound abbreviations were as follows: ethylene carbonate EC, and propylene carbonate PC.

The difference between Examples 18 to 35 and Example 1 lied in that Examples 18 to 35 further included the compound represented by formula III, the compound represented by formula IV, and/or the compound represented by formula V on the basis of the electrolyte of Example 1, as specifically shown in Table 2.

The difference between Examples 36 to 39 and Example 1 lied in that Examples 36 to 39 further included a boron-type lithium salt on the basis of the electrolyte of Example 1, as specifically shown in Table 3.

Preparation of lithium-ion battery

The positive electrode plate, the separator, and the negative electrode plate were sequentially stacked, with the separator positioned between the positive electrode plate and the negative electrode plate to provide separation, and wound to obtain an electrode assembly. The electrode assembly was placed in an outer packaging aluminum-plastic film, moisture was removed at 80°C, the above electrolyte was injected, followed by sealing, and processes such as formation, degassing, and trimming were performed to obtain a lithium-ion battery.

Performance testing:

(1) Test for 45°C cycling performance:

Under a condition of 45°C, the lithium-ion battery was charged at 1C to 4.5 V and then charged at a constant voltage of 4.5 V to 0.05C. Thereafter, it was discharged at a current of 0.5C to 3.0 V. The process of 1C charging and 0.5C discharging was performed for 200 cycles. The discharge capacity of the third cycle was used as the benchmark, and the capacity retention rate was used as the indicator to evaluate the cycling performance of the lithium-ion battery.

Cycling capacity retention rate = discharge capacity of 200th cycle/discharge capacity of third cycle × 100%.

(2) Test for high-temperature storage performance:

The lithium-ion battery was charged at a constant current of 0.5C to 4.55 V at 25°C, and then charged at a constant voltage to a current of 0.05C. The thickness of the lithium-ion battery was tested and recorded as $d_0$. It was placed in a 60°C oven for 4 h, and the thickness at this time was monitored and recorded as d. Thickness expansion rate (%) of lithium-ion battery after high-temperature storage for 4 h = $(d - d_0)/d_0 \times 100\%$. If the thickness expansion rate exceeded 50%, the test was stopped.

**Table 1 Parameters of examples 1-17 and comparative example 1**

| | Mass ratio of compound of formula I-A, compound of formula I-B, compound of formula I-C, or another solvent | Compound of formula II | | Value x | Value z | 45°C cycling capacity retention rate | Thickness expansion rate |
|---|---|---|---|---|---|---|---|
| | | Structural formula | y (wt%) | | | | |
| Example 1 | Formula I-1 (formula I-A)/DEC (formula I-C) =10/90 | Formula II-14 | 1 | 9 | 10 | 68.5% | 37.6% |
| Example 2 | Formula I-1 (formula I-A)/DEC (formula I-C) =15/85 | Formula II-14 | 1 | 5.67 | 15 | 69.7% | 42.7% |
| Example 3 | Formula I-1 (formula I-A)/DEC (formula I-C) =20/80 | Formula II-14 | 1 | 4 | 20 | 69.2% | 49.3% |
| Example 4 | Formula I-1 (formula I-A)/DEC (formula I-C)/ EP (formula I-B)=10/70/20 | Formula II-14 | 1 | 9 | 10 | 70.1% | 36.1% |
| Example 5 | Formula I-1 (formula I-A)/DEC (formula I-C)/ EP (formula I-B)/EC=10/55/20/15 | Formula II-14 | 1 | 7.5 | 10 | 67.2% | 37.0% |
| Example 6 | Formula I-1 (formula I-A)/DEC (formula I-C)/ EP (formula I-B)/EC=10/62/20/8 | Formula II-14 | 1 | 8.2 | 10 | 67.9% | 36.5% |
| Example 7 | Formula I-1 (formula I-A)/DEC (formula I-C)/ EP (formula I-B)/PC=10/65/20/5 | Formula II-14 | 1 | 8.5 | 10 | 69.3% | 35.5% |
| Example 8 | Formula I-1 (formula I-A)/DEC (formula I-C) =10/90 | Formula II-14 | 2 | 9 | 5 | 69.7% | 25.2% |
| Example 9 | Formula I-1 (formula I-A)/DEC (formula I-C) =10/90 | Formula II-3 | 1 | 9 | 10 | 68.2% | 40.3% |
| Example 10 | Formula I-1 (formula I-A)/DEC (formula I-C) =10/90 | Formula II-15 | 1 | 9 | 10 | 68.7% | 38.2% |
| Example 11 | Formula I-1 (formula I-A)/DEC (formula I-C) =10/90 | Formula II-19 | 1 | 9 | 10 | 69.3% | 36.1% |
| Example 12 | Formula I-1 (formula I-A)/DEC (formula I-C) =10/90 | Formula II-14 | 1 | 9 | 3.33 | 73.4% | 20.2% |
| | | Formula II-3 | 2 | | | | |
| Example 13 | Formula I-1 (formula I-A)/DEC (formula I-C) =10/90 | Formula II-3 | 2 | 9 | 2.5 | 74.2% | 23.5% |
| | | Formula II-1 | 2 | | | | |

(continued)

| | Mass ratio of compound of formula I-A, compound of formula I-B, compound of formula I-C, or another solvent | Compound of formula II | | Value x | Value z | 45°C cycling capacity retention rate | Thickness expansion rate |
|---|---|---|---|---|---|---|---|
| | | Structural formula | y (wt%) | | | | |
| Example 14 | Formula I-1 (formula I-A)/DEC (formula I-C) =10/90 | Formula II-15 | 1 | 9 | 2.5 | 76.3% | 15.8% |
| | | Formula II-1 | 3 | | | | |
| Example 15 | Formula I-1 (formula I-A)/DEC (formula I-C) =10/90 | Formula II-19 | 1 | 9 | 2 | 78.9% | 7.5% |
| | | Formula II-1 | 2 | | | | |
| | | Formula II-14 | 2 | | | | |
| Example 16 | Formula I-11 (formula I-A)/ EMC (formula I-C)=10/90 | Formula II-14 | 1 | 9 | 10 | 67.9% | 39.2% |
| Example 17 | Formula I-1 (formula I-A)/ EP (formula I-B) =10/90 | Formula II-14 | 1 | 9 | 10 | 68.8% | 37.2% |
| Comparative Example 1 | Formula I-1 (formula I-A)/DEC (formula I-C) =10/90 | / | / | / | / | * | Greater than 50% |
| Note: "*" indicates that the cycle number cannot reach 200 cycles. | | | | | | | |

By comparing Examples 1 to 17 with Comparative Example 1 in Table 1, it can be seen that the synergistic cooperation between the compound of formula I-A, the compound of formula I-B and/or the compound of formula I-C, and the compound of formula II can significantly improve the cycling performance and high-temperature storage performance of the lithium-ion battery. The electrolyte in Comparative Example 1 contains the compound of formula I without adding the compound represented by formula II. 200 cycles at 45°C cannot be achieved, and the thickness expansion rate at high temperature exceeds 50%. In Examples 1 to 17, by adding the compound of formula I-A, the compound of formula I-B and/or the compound of formula I-C, and the compound of formula II to the electrolyte and adjusting the contents of the compound of formula I-A, the compound of formula I-B and/or the compound of formula I-C, and the compound of formula II within appropriate ranges, the capacity retention rates of the prepared lithium-ion batteries after 200 cycles at 45°C are all about 70% or more, and the thickness expansion rates at high temperature are all lower than 50%. This is especially applicable to Example 15. In Example 15, the electrolyte contains three compounds represented by formula II. Adjusting the contents of the three compounds represented by formula II to appropriate levels is more beneficial to the synergistic cooperation with the compound of formula I. In Example 15, the capacity retention rate after 200 cycles at 45°C can reach 78.9%, and the thickness expansion rate at high temperature is only 7.5%. In the electrolytes of Examples 12 to 14, the compound represented by formula II is a combination of multiple compounds, and similar effects to Example 15 can be obtained. Examples 16 and 17 are parallel examples to Example 1, differing from Example 1 only in the type of the compound of formula I, and similar results to Example 1 can be obtained. The compound of formula I-A can form a protective layer between the positive electrode and the electrolyte as well as between the negative electrode and the electrolyte, thereby improving the oxidation resistance of the electrolyte. The introduction of the compound of formula I-B and/or the compound of formula I-C is beneficial to improving the kinetics of the electrochemical device. In addition, the compound represented by formula II is introduced. The compound represented by formula II can stabilize high-valence transition metals in the positive electrode active material. The mutual synergistic cooperation between the compound of formula I and the compound represented by formula II helps to stabilize the interface between the positive electrode and the electrolyte as well as between the negative electrode and the electrolyte is, thereby suppressing gas production in the electrolyte and improving the cycling performance as well as high-temperature storage performance of the lithium-ion battery. When the contents of the compound of formula I-A, the compound of formula I-B, the compound of formula I-C, and the compound of formula II are within the ranges of the present application, the cycling performance and high-temperature storage performance of the electrochemical device are better.

**Table 2 Parameters of example 1 and examples 18-35**

| | Compound of formula III | | Compound of formula IV | | Compound of formula V | | 45°C cycling capacity retention rate | Thickness expansion rate |
|---|---|---|---|---|---|---|---|---|
| | Structural formula | wt % | Structural formula | wt% | Structural formula | wt% | | |
| Example 1 | / | / | / | / | / | / | 68.5% | 37.6% |
| Example 18 | Formula III-6 | 0.08 | / | / | / | / | 69.3% | 36.4% |
| Example 19 | Formula III-6 | 1 | / | / | / | / | 70.2% | 32.6% |
| Example 20 | Formula III-1 | 2 | / | / | / | / | 69.8% | 29.1% |
| Example 21 | Formula III-1 | 3 | / | / | / | / | 70.7% | 25.2% |
| Example 22 | Formula III-1 | 4 | / | / | / | / | 75.2% | 19.6% |
| | Formula III-6 | 1 | | | | | | |
| Example 23 | / | / | Formula IV-1 | 0.1 | / | / | 69.7% | 36.4% |
| Example 24 | / | / | Formula IV-1 | 0.3 | / | / | 71.2% | 35.7% |
| Example 25 | / | / | Formula IV-1 | 0.5 | / | / | 73.5% | 33.2% |
| Example 26 | / | / | Formula IV-1 | 1 | / | / | 75.5% | 31.5% |
| Example 27 | / | / | Formula IV-1 | 2 | / | / | 74.6% | 29.8% |
| Example 28 | / | / | / | / | Formula V-7 | 0.1 | 69.5% | 35.2% |
| Example 29 | / | / | / | / | Formula V-7 | 0.3 | 70.9% | 33.9% |
| Example 30 | / | / | / | / | Formula V-7 | 0.5 | 71.8% | 31.2% |
| Example 31 | / | / | / | / | Formula V-7 | 1 | 72.2% | 27.9% |
| Example 32 | Formula III-6 | 1 | Formula IV-1 | 0.5 | / | / | 78.3% | 25.2% |
| Example 33 | Formula III-6 | 1 | / | / | Formula V-7 | 0.5 | 76.9% | 23.3% |
| Example 34 | Formula III-6 | 1 | Formula IV-1 | 0.5 | Formula V-7 | 0.5 | 85.7% | 12.6% |
| Example 35 | Formula III-8 | 1 | Formula IV-4 | 0.5 | Formula V-4 | 0.5 | 82.5% | 16.3% |

Examples 18 to 35 in Table 2 are all based on the electrolyte of Example 1 with the further addition of at least one of the compound of formula III, the compound of formula IV, and the compound of formula V. From the data in Table 2, it can be

seen that adding the compound of formula III, the compound of formula IV, and the compound of formula V to the electrolyte of Example 1 can further improve the cycling performance as well as high-temperature storage performance of the electrochemical device. This is because the compound of formula III can form an interface protective layer between the positive electrode and the electrolyte as well as between the negative electrode and the electrolyte. The compound of formula IV and the compound of formula V can polymerize to form a protective layer, and their mutual cooperation is beneficial to suppressing electrolyte consumption and gas production. This is especially applicable to Example 34. In Example 34, appropriate amounts of the compound of formula III, the compound of formula IV, and the compound of formula V are all added to the electrolyte of Example 1. As shown in Table 2, the capacity retention rate of Example 34 after 200 cycles at 45°C is as high as 85.7%, and the thickness expansion rate at high temperature is significantly reduced to 12.6%. Example 35 is a parallel example to Example 34, differing from Example 35 in the types of the compound of formula III, the compound of formula IV, and the compound of formula V, and can achieve similar effects to Example 34.

**Table 3 Parameters of example 1 and examples 36-39**

| Example | Boron-type lithium salt | | 45°C cycling capacity retention rate |
|---|---|---|---|
| | Structural formula | wt% | |
| Example 1 | / | / | 68.5% |
| Example 36 | LiBOB | 0.1 | 70.3% |
| Example 37 | LiBOB | 0.3 | 73.5% |
| Example 38 | LiBOB | 0.5 | 78.6% |
| Example 39 | LiBOB | 1 | 79.0% |

Examples 36 to 39 in Table 3 are all based on the electrolyte of Example 1 with the further addition of the boron-type lithium salt. By comparing Example 1 with Examples 36-39, it can be seen that adding the boron-type lithium salt to the electrolyte of Example 1 can further improve the cycling performance of the lithium-ion battery.

The above are only preferred embodiments of the present application and are not intended to limit the present application. Any modifications, equivalent replacements, and improvements made within the spirit and principles of the present application should be included within the protection scope of the present application.

## Claims

1. An electrolyte, wherein the electrolyte comprises a compound of formula I and a compound represented by formula II; wherein

the compound of formula I comprises at least two of a compound represented by formula I-A, a compound represented by formula I-B, and a compound represented by formula I-C, and at least comprises the compound represented by formula I-A;

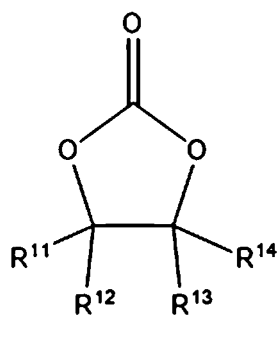

formula I-A

in formula I-A, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent comprises halogen, and the compound represented by formula I-A contains at least one fluorine atom;

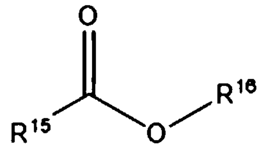 formula I-B

in formula I-B, $R^{15}$ and $R^{16}$ are each independently selected from $C_1$-$C_5$ alkyl;

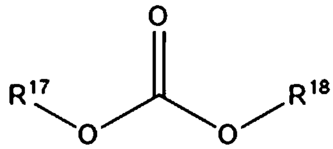 formula I-C

n formula I-C, $R^{17}$ and $R^{18}$ are each independently selected from $C_1$-$C_5$ alkyl;

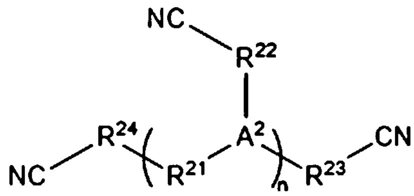 formula II;

and
in formula II, n is selected from integers of 0 to 4, $A^2$ is selected from any one of

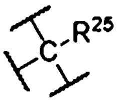, 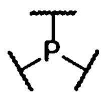, or 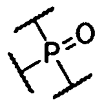,

and $R^{21}$, $R^{22}$, $R^{23}$, and $R^{24}$ are each independently selected from any one of covalent single bond, $C_1$-$C_5$ alkylene, $C_2$-$C_4$ alkenylene, or

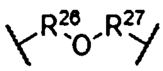;

wherein $R^{25}$ is selected from any one of hydrogen, cyano, $C_1$-$C_3$ alkyl, or $C_1$-$C_3$ alkyl substituted with cyano, and $R^{26}$ and $R^{27}$ are each independently selected from covalent single bond or $C_1$-$C_3$ alkylene.

**2.** The electrolyte according to claim 1, wherein the compound represented by formula I-A is selected from at least one of the following compounds:

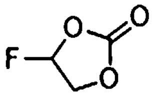 formula I-1, 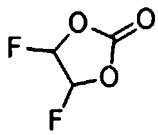 formula I-2, 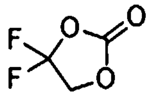 formula I-3,

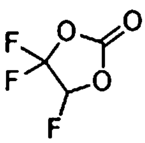 formula I-4, 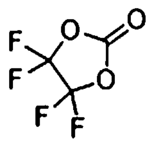 formula I-5, 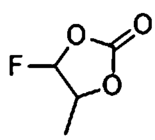 formula I-6,

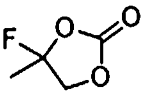 formula I-7, 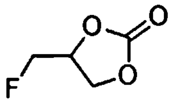 formula I-8, 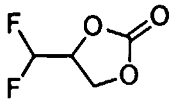 formula I-9,

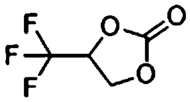 formula I-10, 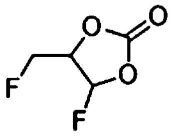 formula I-11, 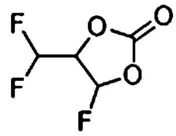 formula I-12,

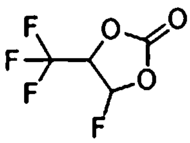 formula I-13, 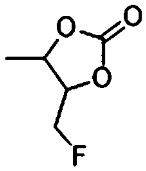 formula I-14, or 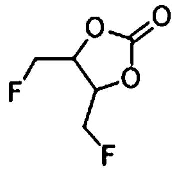 formula I-15.

**3.** The electrolyte according to claim 1, wherein

the compound represented by formula I-B is selected from at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, or butyl butyrate; and

the compound represented by formula I-C is selected from at least one of dimethyl carbonate, diethyl carbonate, methyl ethyl carbonate, methyl propyl carbonate, ethyl propyl carbonate, or dipropyl carbonate.

**4.** The electrolyte according to claim 1, wherein the compound represented by formula II is selected from at least one of the following compounds:

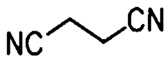 formula II-1, 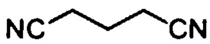 formula II-2,

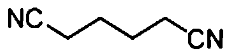 formula II-3, 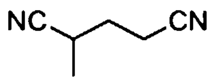 formula II-4,

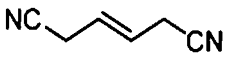 formula II-5, 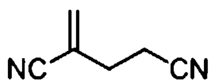 formula II-6,

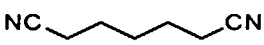 formula II-7, 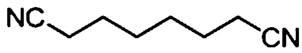 formula II-8,

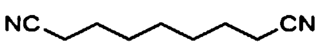 formula II-9, 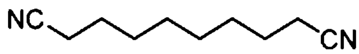 formula II-10,

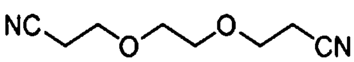 formula II-11, 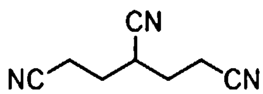 formula II-12,

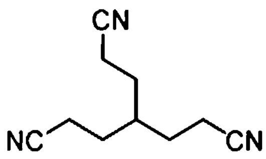 formula II-13, 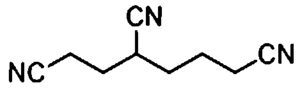 formula II-14,

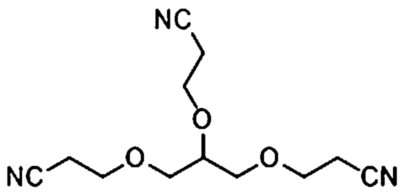 formula II-15, 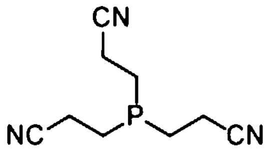 formula II-16,

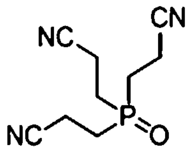 formula II-17, 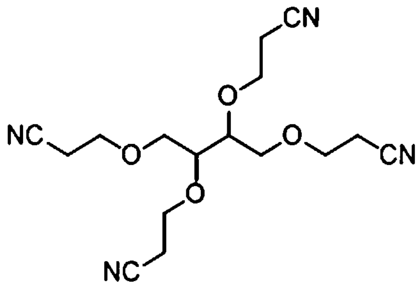 formula II-18,

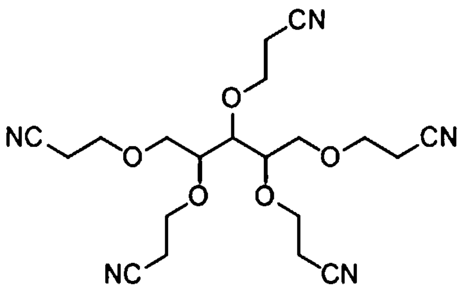 formula II-19,

or

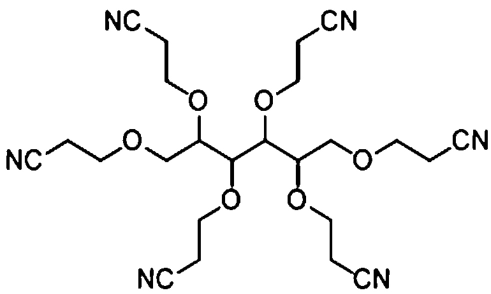 formula II-20.

5. The electrolyte according to claim 1, wherein based on a mass of the electrolyte, a mass percentage of the compound represented by formula I-A is denoted as $x_1$%, a sum of mass percentage of the compound represented by formula I-B and the compound represented by formula I-C is denoted as $x_2$%, a mass percentage of the compound represented by formula II is denoted as y%, a ratio of $x_2$ to $x_1$ is denoted as x, and a ratio of $x_1$ to y is denoted as z, satisfying at least one of the following conditions:

(I)

$$5 \leq x_1 \leq 20;$$

(II)

$$60 \leq x_2 \leq 90;$$

(III)

$$3 \leq x \leq 11;$$

or
(IV)

$$1 \leq z \leq 20.$$

**6.** The electrolyte according to claim 5, satisfying at least one of the following conditions:

(i)

$$6 \leq x_1 \leq 10;$$

(ii)

$$65 \leq x_2 \leq 80;$$

(iii)

$$7 \leq x \leq 10;$$

or
(iv)

$$1 \leq z \leq 5.$$

**7.** The electrolyte according to claim 1, wherein the electrolyte further comprises a compound represented by formula III;

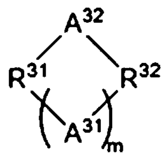 formula III

in formula III, m is selected from 0 or 1, $A^{31}$ and $A^{32}$ are each independently selected from any one of

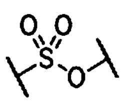 , 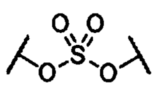 , or 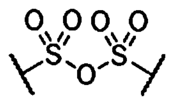 , and 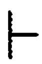

represents a binding site with an adjacent atom; and
$R^{31}$ and $R^{32}$ are each independently selected from covalent single bond, substituted or unsubstituted $C_1$-$C_5$ alkylene, and substituted or unsubstituted $C_2$-$C_5$ alkenylene, and in a case of substitution, a substituent comprises halogen.

**8.** The electrolyte according to claim 7, wherein the compound represented by formula III is selected from at least one of

the following compounds:

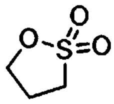 formula III-1, 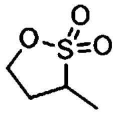 formula III-2, 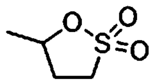 formula III-3,

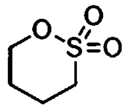 formula III-4, 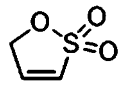 formula III-5, 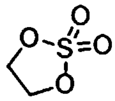 formula III-6,

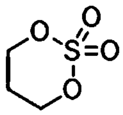 formula III-7, 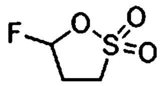 formula III-8, 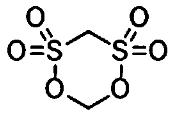 formula III-9,

or

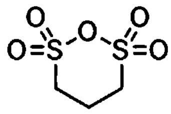 formula III-10.

**9.** The electrolyte according to claim 1, wherein the electrolyte further comprises a compound represented by formula IV;

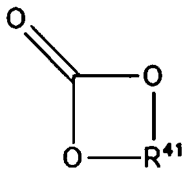 formula IV

in formula IV, $R^{41}$ is selected from substituted $C_1$-$C_6$ alkylene, and substituted or unsubstituted $C_2$-$C_6$ alkenylene, and in a case of substitution, a substituent is selected from $C_2$-$C_6$ alkenyl.

**10.** The electrolyte according to claim 9, wherein the compound represented by formula IV is selected from at least one of the following compounds:

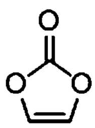 formula IV-1, 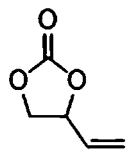 formula IV-2, 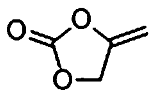 formula IV-3,

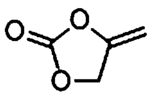 formula IV-4, or 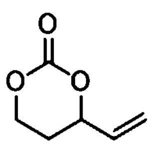 formula IV-5.

**11.** The electrolyte according to claim 1, wherein the electrolyte further comprises a compound represented by formula V;

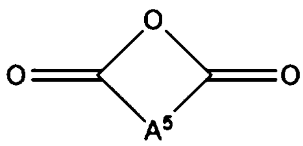 formula V

in formula V, $A^5$ is independently selected from

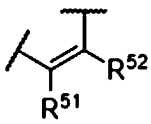 or 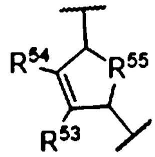, $R^{51}$,

$R^{52}$, $R^{53}$, and $R^{54}$ are each independently selected from hydrogen, substituted or unsubstituted $C_1$-$C_6$ alkyl, and substituted or unsubstituted $C_6$-$C_{10}$ aryl, $R^{55}$ is selected from substituted or unsubstituted $C_1$-$C_6$ alkylene, and in a case of substitution, a substituent comprises halogen.

**12.** The electrolyte according to claim 11, wherein the compound represented by formula V is selected from at least one of the following compounds:

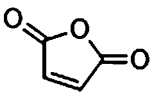 formula V-1, 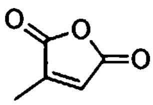 formula V-2, 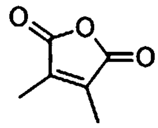 formula V-3,

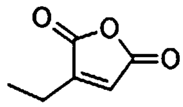 formula V-4, 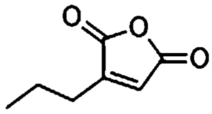 formula V-5,

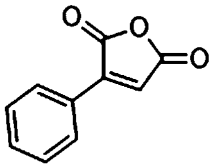 formula V-6, 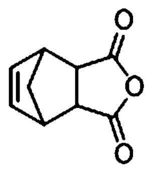 formula V-7,

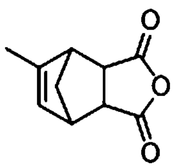 formula V-8, 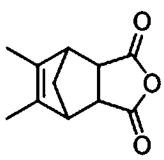 formula V-9, or 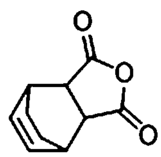 formula V-10.

**13.** The electrolyte according to any one of claims 1 to 12, wherein the electrolyte satisfies at least one of the following conditions:

(1) the electrolyte comprises a compound represented by formula III, and based on a mass of the electrolyte, a mass percentage of the compound represented by formula III is 0.08wt% to 5wt%;
(2) the electrolyte comprises a compound represented by formula IV, and based on a mass of the electrolyte, a mass percentage of the compound represented by formula IV is 0.01wt% to 2wt%;
(3) the electrolyte comprises a compound represented by formula V, and based on a mass of the electrolyte, a mass percentage of the compound represented by formula V is 0.01wt% to 1wt%; or

(4) the electrolyte comprises the compound represented by formula III, the compound represented by formula IV, and the compound represented by formula V, and based on a mass of the electrolyte, a mass ratio of the compound represented by formula III, the compound represented by formula IV, and the compound represented by formula V is 2-5:1-2:1-2.

**14.** The electrolyte according to claim 1, wherein the electrolyte further comprises a boron-containing lithium salt;

the boron-containing lithium salt is selected from at least one of lithium tetrafluoroborate, lithium bis(oxalate) borate, or lithium difluoro(oxalate)borate; and
based on a mass of the electrolyte, a mass percentage of the boron-containing lithium salt is 0.01wt% to 1wt%.

**15.** An electrochemical device, wherein the electrochemical device comprises the electrolyte according to any one of claims 1 to 14.

**INTERNATIONAL SEARCH REPORT**

International application No. **PCT/CN2023/121742**

**A. CLASSIFICATION OF SUBJECT MATTER**

H01M10/0567(2010.01)i; H01M10/0569(2010.01)i; H01M10/0568(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M10/-

Documentation searched other than minimum documentation to the extent that such documents are included in the fields searched

Electronic data base consulted during the international search (name of data base and, where practicable, search terms used)

CNTXT, ENTXT, CNKI, STN: 锂离子电池, 电解液, 氟, 碳酸酯, 碳酸乙烯酯, 碳酸亚乙烯酯, 羧酸酯, 乙酸乙酯, 磺酸内酯, 酸酐, 腈, 氰, 硼酸锂, 高温, 高压, lithium ion battery, electrolyte, F, fluoro, fluorine, fluorinated, FEC, fluoroethylene carbonate, vinylene carbonate, carboxylate, carboxylic, ethyl acetate, sultone, anhydride, nitrile, borate, high voltage, high temperature

**C. DOCUMENTS CONSIDERED TO BE RELEVANT**

| Category* | Citation of document, with indication, where appropriate, of the relevant passages | Relevant to claim No. |
|---|---|---|
| X | CN 102403535 A (XIANGHE KUNLUN CHEMICALS CO., LTD.) 04 April 2012 (2012-04-04)<br>description, embodiment 2, and paragraph 12 | 1-10, 13-15 |
| Y | CN 102403535 A (XIANGHE KUNLUN CHEMICALS CO., LTD.) 04 April 2012 (2012-04-04)<br>description, embodiment 2, and paragraph 12 | 11-12 |
| X | CN 115954547 A (NINGDE AMPEREX TECHNOLOGY LTD.) 11 April 2023 (2023-04-11)<br>description, embodiment 4-1, and paragraphs 8-13 | 1-10, 13-15 |
| Y | CN 115954547 A (NINGDE AMPEREX TECHNOLOGY LTD.) 11 April 2023 (2023-04-11)<br>description, embodiment 4-1, and paragraphs 8-13 | 11-12 |
| Y | CN 112074986 A (SOLVAY) 11 December 2020 (2020-12-11)<br>claims 1-18, and description, paragraphs 141-143 | 11-12 |
| A | KR 20060114919 A (LG CHEMICAL LTD.) 08 November 2006 (2006-11-08)<br>entire document | 1-15 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 June 2024** | **19 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/121742**

| Patent document cited in search report | | | Publication date (day/month/year) | Patent family member(s) | | | Publication date (day/month/year) |
|---|---|---|---|---|---|---|---|
| CN | 102403535 | A | 04 April 2012 | None | | | |
| CN | 115954547 | A | 11 April 2023 | CN | 115954547 | B | 02 June 2023 |
| CN | 112074986 | A | 11 December 2020 | KR | 20210038420 | A | 07 April 2021 |
| | | | | EP | 3788671 | A1 | 10 March 2021 |
| | | | | US | 2021234199 | A1 | 29 July 2021 |
| | | | | JP | 2021524125 | A | 09 September 2021 |
| | | | | WO | 2019211353 | A1 | 07 November 2019 |
| KR | 20060114919 | A | 08 November 2006 | KR | 100833041 | B1 | 27 May 2008 |

Form PCT/ISA/210 (patent family annex) (July 2022)